# EUROPÄISCHE PATENTANMELDUNG

(11) **EP 0 856 252 A2**
(43) Veröffentlichungstag der Anmeldung: **05.08.1998**
(21) Anmeldenummer: 98101240.4
(22) Anmeldetag: 24.01.1998
(51) Int. Cl.: A01K 5/02

(54) **Verfahren und Einrichtung zum Betreiben einer im wesentlichen automatischen Fütterungsanlage**

(30) Priorität: 29.01.1997 DE 19703181; 30.04.1997 DE 29707807 U
(71) Anmelder: Schwienhorst, Georg, 48231 Warendorf-Hoetmar (DE)
(72) Erfinder: Schwienhorst, Georg, 48321 Warendorf-Hoetmar (DE); Schwienhorst, Karl, 48321 Warendorf-Hoetmar (DE)

(57) **Zusammenfassung**

Einrichtung zum Betreiben einer im wesentlichen automatischen Füttungsanlage für in Großbuchten gehaltene Absatzferkel, die bis zu zehn mal am Tag gefüttert werden. Dabei ist es wichtig, daß die jeweils gereichte Futtermenge äußerst genau dosiert wird.

Erfindungsgemäß gelangt das Futter von einem Horizontalförderer (10) aus auf eine eine Dosiereinrichtung bildende Dosierplatte (14), die in einem veränderbaren Abstand zum Horizontalförderer (10) je nach Alter und den Bedürfnissen der Absatzferkel einstellbar ist. Bei Erreichen einer vorbestimmten Futtermenge wird die Dosierplatte (14) mittels eines Linearantriebes (18) geschwenkt, so daß das Futter in den Trog (11) fällt. Durch die Dosiereinrichtungen werden unzulässige Schwankungen in der Futtermenge vermieden.

## Beschreibung

Die Erfindung betrifft eine Einrichtung zum Betreiben einer im wesentlichen automatischen Fütterungsanlage für in Großbuchten gehaltene Absatzferkel, bei dem das Futter aus einem Vorratsbehälter mittels eines horizontalen Förderers portioniert in einen Trog eingebracht wird.

Als Absatzferkel werden die Ferkel bezeichnet, die von Muttertieren abgesetzt und ausschließlich durch geeignetes Futter ernährt werden. Nach der sogenannten Absetzzeit werden sie dann in einem Maststall gehalten.

Die Zeit nach dem Absetzen der Ferkel von den Muttertieren ist eine besonders kritische Zeit, insbesondere bedingt durch die Umstellung der Ernährung. Es ist durch Versuche festgestellt worden, daß die Verluste minimiert werden können, wenn die Absatzferkel in relativ kurzen Zeitabständen mit exakt dosierten Futtermengen gefüttert werden. So ist es vorteilhaft, wenn die Fütterung über den Tag verteilt 9 bis 10 mal erfolgt mit einer Ruhezeit während der Nacht. Da heutzutage große Mengen von Schweinen von einem Mäster gehalten werden, ergibt sich, daß bei einem Ferkelzüchter die Würfe mehrerer Elterntiere in einem Stall nach dem Absetzen gehalten werden. Es ist dann vorteilhaft, wenn die Fütterungsanlage so ausgelegt ist, daß jedes Ferkel einen eigenen Freßplatz erhält, so daß alle Ferkel gleichzeitig fressen können. Daraus ergibt sich eine relativ große Länge des Troges.

Bislang sind zwei mechanisierte Fütterungssysteme bekannt, nämlich das sogenannte Caras-System und das Dorset-System (Zeitschrift top Agrar, Heft 11, November 1996 und Zeitschrift Schweinezucht und Schweinemast 44. Jahrgang 6. November 1996. Bei dem Caras-System wird mit Hilfe einer Schnecke ein umgebendes Rohr mit Futter gefüllt, welches an der Oberseite gelocht ist. Sobald das volle Rohr gefüllt ist, wird die Zuführung aus einem Vorratsbehälter unterbrochen und das volle Rohr wird umgedreht, so daß das Futter herausrieseln kann. Bei dem Dorset-System füllt die Schnecke kleine Futterkammern, die waagerecht zwischen zwei Blechen liegen. Zum Herausrieseln des Futters wird ein unteres Blech, welches Löcher in Größe der Futterkammern hat, verschoben, so daß das Futter aus den Kammern in der Trog fällt.

Es ist außerdem eine selbsttätige Einrichtung zur rationierten Fütterung von Schweinen bekannt, bei der als Horizontalförderer ebenfalls ein Schneckenförderer verwendet wird, dessen Gehäuse aus zwei gelenkig miteinander verbundenen Gehäusehälften besteht. Die dem Trog zugewandte Gehäusehälfte kann um eine zur Drehachse der Schnecke parallele Achse verschwenkt werden, so daß sich der Querschnitt und demzufolge das aufzunehmende Volumen bzw. die Futtermenge verändert werden kann. Besteht der Stall aus mehreren Buchten über die sich die Förderschnecke erstreckt, ist die schwenkbare Gehäusehälfte noch entsprechend der Anzahl der Buchten unterteilt, so daß die Futtermengen in den Buchten unterschiedlich sein können. Bei allen Ausführungen ist der Horizontalförderer bzw. der Schneckenförderer ein Dosierförderer, mit dem einstellbare Mengen des Futters in den Trog gebracht werden können. Damit sichergestellt ist, daß auch die gewünschte Menge in den Trog fällt, ist es notwendig, daß das gesamte Gehäuse vollkommen entleert wird. Da jedoch während des Förderns des Futters aus dem Vorratsbehälter heraus aus dem Gehäuse bei allen Ausführungen kein Futter austreten kann, ist es unvermeidbar, daß das Futter verdichtet wird, da nicht sichergestellt werden kann, daß bei jeder Fütterung eine gleichbleibende Verdichtung erzielt wird, ergeben sich daraus Schwankungen, die zwar bei Mastschweinen unerheblich sind, nicht jedoch aber für die Absatzferkel in der empfindlichen Phase nach dem Absetzen von den Muttertieren. Bei den Fütterungseinrichtungen wird die Fütterung über eine Steuereinheit gesteuert. Sie erfolgt demzufolge unbeobachtet. Selbst wenn der Ferkelzüchter jede Fütterung beobachten oder kontrollieren würde kann er nicht erkennen, ob das Gehäuse des Schneckenförderers vollständig entleert ist, so daß es auch noch dadurch zu erheblichen Schwankungen in der Futtermenge kommen kann. Mit den zuvor beschriebenen Anlagen lassen sich die geforderten Genauigkeiten an die Menge des Futters während jeder Fütterung für Absatzferkel nicht erreichen.

Der vorliegenden Erfindung liegt von daher die Aufgabe zugrunde, eine Einrichtung zum Betreiben einer im wesentlichen automatischen Fütterungsanlage der eingangs näher beschriebenen Art so auszubilden, daß während jeder Fütterung eine stets gleichbleibende und äußerst genaue Menge den Absatzferkeln gereicht wird, wobei sichergestellt sein muß, daß die Menge den Erfordernissen äußerst genau angepaßt werden kann. Der Erfindung liegt außerdem die Aufgabe zugrunde, eine im wesentlichen selbsttätig arbeitende Fütterungsanlage aufzuzeigen, die nach der erfindungsgemäßen Einrichtung arbeitet und konstruktiv einfach ist und betriebssicher arbeitet.

Die auf das Verfahren gerichtete Aufgabe wird gelöst, indem mittels einer unterhalb des Horizontalförderers angeordneten Dosiereinrichtung das aus dem Horizontalförderer auslaufende Futter aufgefangen wird, und daß der Futterstrom abgeschaltet wird, sobald eine vorgegebene Futtermenge erreicht ist, und daß die jeweilige Futtermenge aus der Dosiereinrichtung in den Trog geschüttet wird, wobei die Futtermenge variabel und an die Bedürfnisse und dem Alter der Absatzferkel angepaßt ist.

Durch die Dosiereinrichtung außerhalb des Horizontalförderers ist es nunmehr möglich, daß unabhängig von dem Zustand eine stets gleichbleibende Menge in den Futtertrog geschüttet wird, da der Horizontalförderer von der Dosiereinrichtung gesteuert wird. Im Gegensatz zu den bekannten Ausführungen wird nicht das Gehäuse oder werden Kammern während des Betriebes des Horizontalförderers gefüllt, sondern die freigängliche Dosiereinrichtung. Da das Futter im freien Fall in die Dosiereinrichtung gelangt, findet keine Verdichtung statt, so daß sich auch daraus keine Schwankungen ergeben können. Ferner ist es unbedeutend, ob sich im Gehäuse des Horizontalförderers Ablagerungen gebildet haben. Üblicherweise führt der Ferkelzüchter Kontrollgänge durch. Er kann dann auch gezielt die Fütterung insbesondere im Hinblick auf die Dosierung kontrollieren. Die Dosiereinrichtung ermittelt nicht das Gewicht des Futters, sondern das Volumen, welches in einem Verhältnis zum Gewicht steht.

Die auf die Fütterungsanlage gerichtete Aufgabe wird auch dadurch gelöst, indem die Dosiereinrichtung aus einer ebenen oder im wesentlichen ebenen Platte oder einer Schale besteht, die an einer Hubeinrichtung angelenkt mit der der Abstand zum Horizontalförderer stufenlos innerhalb des Hubes einstellbar ist. Dadurch wird auch eine äußerst kostengünstige Lösung geschaffen, da eine Platte oder eine Schale relativ einfach herzustellen ist. Die Hubeinrichtung ist ebenfalls eine konstruktiv einfache Einheit, die an einer Stelle, beispielsweise an einem Stirnende der Dosiereinrichtung zu installieren ist. Da der Abstand zwischen dem Horizontalförderer und der Dosiereinrichtung stufenlos einstellbar ist, ergibt sich mit größer werdendem Abstand auch eine entsprechende größere Menge des Futters, die die Dosiereinrichtung aufnehmen kann. Demzufolge können die Mengen äußerst genau und stets gleichbleibend eingestellt werden. Die Betätigung der Hubeinrichtung kann manuell oder auch mittels eines gesteuerten Antriebes nach einem Fütterprogramm erfolgen. Der Horizontalförderer ist zweckmäßigerweise wiederum ein Schneckenförderer, wobei die um den Kern herumgeführten Windungen nicht endlos sein müssen, sondern auch aus einzelnen schrägstehenden Scheiben gebildet sein können. Es kann jedoch auch ein Schleppförderer Verwendung finden. Der Horizontalförderer weist zweckmäßigerweise ein äußeres, festes Gehäuse auf, welches an der der Dosiereinrichtung zugewandten Seite mit sich über die Länge der Dosiereinrichtung erstreckende, im Abstand zueinander angeordnete Ausströmöffnungen oder mit einem durchgehenden Schlitz versehen ist. Die Steuerung des Horizontalförderers ist dann so ausgelegt, daß der Fördervorgang unterbrochen wird, sobald die durch das ausströmende Futter sich bildenden Kegel den Raum zwischen der Platte bzw. der Schale und dem Gehäuse ausfüllen.

In weiterer Ausgestaltung ist vorgesehen, daß die Dosiereinrichtung mittels eines angeschlossenen Schwenkantriebes um eine Horizontalachse schwenkbar ist. Nachdem die Dosiereinrichtung die gewünschte Menge aufgenommen hat, wird dieser Schwenkantrieb eingeschaltet, so daß das Futter in den darunter stehenden Trog fällt. Dabei ist es dann zweckmäßig, wenn der Schwenkantrieb ein steuerbarer Linearantrieb ist, der zwangsgeführt der Verstellbewegung der Dosiereinrichtung folgt. Derartige Linearantriebe sind in vielen Ausführungen üblich, demzufolge preiswert zu beziehen. Durch die Zwangsführung während der Einstellung der Dosiereinrichtung bildet er außerdem eine Geradführung, so daß sichergestellt ist, daß sich die Stellung der Dosiereinrichtung bzw. der Platte nicht ändert. Dies läßt sich konstruktiv besonders einfach umsetzen, wenn der Linearantrieb in einer am Hubgestänge angelenkten Schwinge aufgehängt ist, wobei sich die Schwinge und/oder der Linearantrieb an einer ortsfesten Führungsfläche abstützt. Anstelle der Führungsfläche könnte auch eine geeignete Führung verwendet werden. Der Linearantrieb ist vorzugsweise mit dem der Dosiereinrichtung abgewandten Ende mit der Schwinge gelenkig verbunden. Die Einstellung der Dosiereinrichtung zum Horizontalförderer wird besonders einfach und exakt, wenn die Hubeinrichtung einen auf einer ortsfesten Achse schwenkbar gelagerten, zweiarmigen Hebel aufweist, der mit dem der Dosiereinrichtung zugeordneten Ende an einer sich über die Länge der Dosiereinrichtung erstreckenden Hubstange angelenkt ist, und daß gegenüberliegende freie Ende eine Spindelmutter trägt, in die eine Stellspindel eingedreht ist, deren gegenüberliegendes, unteres Ende in einem Festlager gelagert ist. Durch Verdrehen der Stellspindel wird der Hebel auf der ortsfesten Achse verdreht, so daß je nach Drehrichtung der Stellspindel der Abstand der Dosiereinrichtung zum Horizontalförderer vergrößert oder verkleinert wird. Da die Einstellung der Dosiereinrichtung nicht laufend geändert wird, ist es ausreichend, wenn die Stellspindel von Hand beispielsweise mittels einer Kurbel betätigt werden kann. Für eine vollautomatisch arbeitende Anlage, könnte jedoch auch ein Stelltrieb eingesetzt werden. Damit eine ausreichende Halterung der Dosiereinrichtung über die Länge des Horizontalförderer sichergestellt ist, ist vorgesehen, daß die ortsfeste Achse parallel und im Abstand zur Hubstange verläuft, und daß die Hubstange über mehrere im Abstand zueinander angeordnete Lagerlaschen mit der ortsfesten Achse verbunden ist. Damit die ortsfeste Achse sich nicht verbiegen kann, ist die in mehreren im Abstand zueinander angeordneten ortsfesten Lagern gelagert. Diese Lager könnten über Stangen beispielsweise mit der Decke oder dem Boden des Stalles verbunden sein. Zweckmäßigerweise liegen die Lagerlaschen direkt neben diesen ortsfesten Lagern.

Damit beim Entleeren der Dosiereinrichtung kein Futter in den Stall gelangt, ist unterhalb des Horizontalförderers ein Einfülltrichter vorgesehen, der in den Trog einmündet. Die Dosiereinrichtung liegt dann im oberen Bereich. In konstruktiv einfacher Weise ist die ortsfeste Achse dann zweckmäßigerweise an einer Seitenwand des Einfülltrichters gelagert.

Die zuvor beschriebene Hubeinrichtung ist beispielsweise zu sehen. Es können prinzipiell alle gängigen Hubeinrichtungen, wie z.B. Hubscheeren verwendet werden. Voraussetzung ist jedoch die stufenlose, feinfühlige Verstellung. Die Hubeinrichtung muß auch nicht am Einfülltrichter gelagert werden, sondern könnte auch beispielsweise an einem Gestänge oder sonstigen Streben aufgehängt werden, die an der Decke des Stalles befestigt sind.

wie bereits ausgeführt, ist die kritische Zeit für die Absatzferkel die Zeit nach dem Absetzen von den Muttertieren. Es ist dann wichtig, daß die Futtermenge dem Gesundheitszustand angepaßt wird. Es ist deshalb ein Sensor zur Ermittlung des Trogzustandes vorgesehen, dessen Signale in die Steuerungselektronik einspeisbar sind.

Der Sensor kann beispielsweise so gesteuert werden, daß nach einer vorgegebenen Zeit nach dem Einschütten des Futters in den Trog ermittelt wird, ob diese Futtermenge gefressen wurde oder ob noch Restes übrig geblieben sind. Wird durch den Sensor festgestellt, daß die gereichte Futtermenge aufgefressen wurde, kann der Züchter daraus schließen, daß der Gesundheitszustand aufgrund der Freßlust der Ferkel als gut bezeichnet werden kann. Er kann dann die Futtermenge beibehalten oder erhöhen. Wird jedoch festgestellt, daß die Menge nicht aufgenommen wurde, ist der Gesundheitszustand der Ferkel zunächst als kritisch anzusehen. Es sollte dann die Futtermenge bzw. die Anzahl der Fütterungen reduziert werden oder die nächstfällige Mahlzeit ausfallen bzw. verschoben werden, und/oder eine fachliche Untersuchung dieser Störung in der Futterentnahme erfolgen.

Da der Sensor die ermittelten Signale in die Steuerungselektronik einspeist, können diese entsprechend verarbeitet bzw. in Form von Lichtsignalen angezeigt werden. Durch den Sensor wird ein Störverhalten bezüglich der Futterentnahme der Ferkel rechtzeitig erkannt und eine angemessene Fortsetzung der Fütterung eingeleitet. Eine konstruktiv einfache Lösung wird erreicht, indem außerhalb der Dosierplatte wenigstens ein Steigrohr aufrecht angeordnet ist, welches an das Gehäuse des Horizontalförderers angeschlossen ist und wenn in dem Steigrohr, im unteren, dem Horizontalförderer abgewandten Bereich mindestens ein Sensor angeordnet ist. Durch den Horizontalförderer wird Futter in das Steigrohr abgegeben, wenn die Dosierplatte beschickt wird bzw. bereits beschickt worden ist. Das nach unten offene Steigrohr erlaubt es, daß auch diese Futtermenge den Trog erreicht und verzehrt wird. Dies ist ein Indiz dafür, daß der Gesundheitszustand der Tiere gut ist, während bei einem verschlechterten Gesundheitszustand der Ferkel auch diese Futtermenge nicht verzehrt wird, so daß eine Veränderung der Futtermenge und/oder die Anzahl der Fütterungen bzw. deren Zeitabstände die Forge sein wird. Zweckmäßigerweise ist das Steigrohr an das Austragende des Horizontalförderers angeschlossen. Nachdem sich auf der Dosierplatte fortlaufend bis zur letzten Austrittsöffnung Futterkegel gebildet haben, wird auch das Steigrohr bis zu einer vom Sensor bestimmten Höhe mit Futter gefüllt, wobei sich ein Schüttkegel am Boden des Troges bildet. Der oder die Sensoren sind entlang der Hauptkörperachse des Steigrohres einstellbar bzw. verschiebbar angeordnet. Gemessen an der Länge einer Fütterungsanlage können weitere Steigrohre mit Sensoren im Verlauf der Förderstrecke angeordnet sein.

Anhand der beiliegenden Zeichnungen wird die Erfindung noch näher erläutert.

Es zeigen:
- Figur 1: die nach dem erfindungsgemäßen Vorschlag arbeitende Fütterungseinrichtung in einer Stirnansicht, bei der die als Dosierplatte ausgebildete Dosiereinrichtung in einem geringsten Abstand zum Horizontalförderer steht,
- Figur 2: eine der Figur 1 entsprechende Stirnansicht, jedoch steht die Dosierplatte im größten Abstand zum Horizontalförderer
- Figur 3: eine der Figur 2 entsprechende Stirnansicht, jedoch mit geschwenkter Dosierplatte,
- Figur 4: die Fütterungseinrichtung in einer Seitenansicht, stark schematisiert,
- Figur 5: die Dosierplatte gemäß den Figuren 1 bis 4 in einer Draufsicht.
- Figur 6: die mit einem Steigrohr und einem Sensor ausgerüstete Fütterungseinrichtung in einer Seitenansicht und
- Figur 7: eine der Figur 6 entsprechende Stirnansicht.

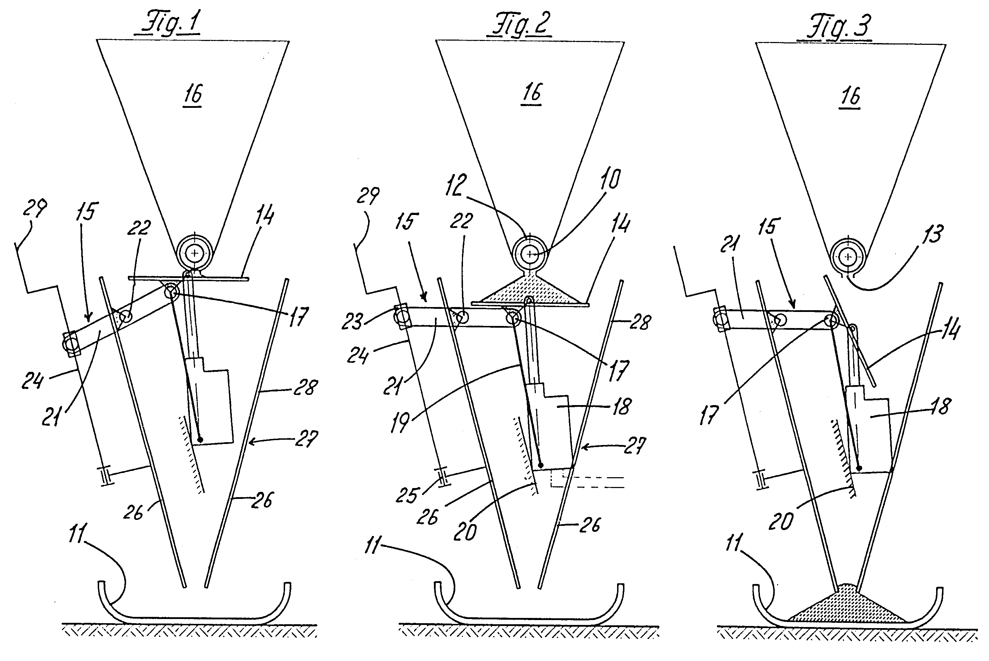

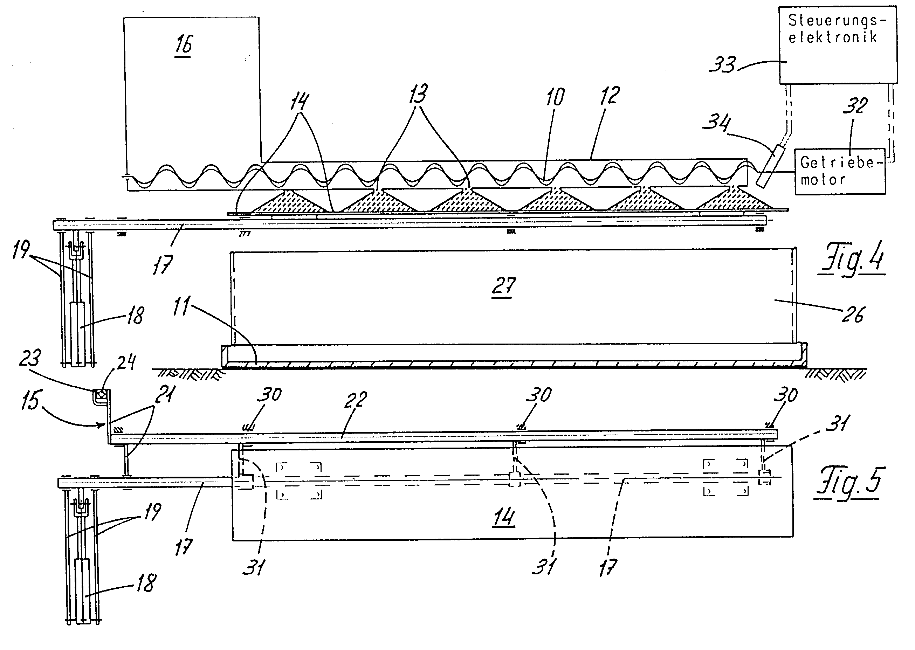

Die in den Figuren 1 bis 5 dargestellte Fütterungseinrichtung ist mit einem Horizontalförderer 10 ausgerüstet, der im dargestellten Ausführungsbeispiel ein Schneckenförderer ist. Dieser Horizontalförderer 10 erstreckt sich über die Länge einer Großbucht, in der beispielsweise hundert und mehr Absatzferkel gehalten werden. Die konkrete Ausführung des Horizontalförderers richtet sich nach der Bauart des Stalles. Unterhalb des Horizontalförderers 10 ist ein etwa gleich langer Trog 11 auf dem Boden des Stalles angeordnet. Demzufolge wird die Großbucht in zwei Einzelbuchten unterteilt. Das Gehäuse 12 des Horizontalförderers 10 ist an der dem Trog 11 zugewandten Seite mit Auslauföffnungen 13 für das antransportierte Futter versehen. Die Auslauföffnungen 13 liegen im Abstand zueinander. Direkt unterhalb des Horizontalförderers 10 ist eine Dosiereinrichtung installiert, mit der das durch die Auslauföffnungen 13 ausrieselnde Futter aufgefangen wird. Im dargestellten Ausführungsbeispiel ist die Dosiereinrichtung eine einfache Dosierplatte 14, die an einer Hubeinrichtung 15 schwenkbar gelagert ist. Wie ein Vergleich der Figur 1 mit der Figur 2 zeigt, kann die Dosierplatte 14 mittels der Hubeinrichtung 15 innerhalb des Verstellbereiches stufenlos verstellt werden. Gemäß den Figuren 4 und 5 ist die Hubeinrichtung an einem Stirnende der Dosierplatte 14 montiert. An dieser Seite ist im dargestellten Ausführungsbeispiel auch ein Vorratsbehälter 16 in Form eines Trichters vorgesehen, aus dem das Futter mittels des Horizontalförderers 10 abgezogen wird Zur Abgabe des von der Dosierplatte 14 aufgefangenen Futters in den Trog 11 kann die Dosierplatte 14 um eine Horizontalachse 17 geschwenkt werden, die als Rohr ausgebildet ist und sich unterhalb der Dosierplatte 14 über die gesamte Länge erstreckt, und die außerdem gegenüber der Mittelachse der Dosierplatte 14 in Richtung zur Hubeinrichtung 15 versetzt ist. Zum Schwenken der Dosierplatte 14 ist ein Stelltrieb in Form eines Linearantriebes 18 vorgesehen, der entweder direkt an die Dosierplatte 14 angeschlossen sein kann, oder aber mittels eines Auslegers an die Horizontalachse 17 angelenkt sein kann. Im dargestellten Ausführungsbeispiel ist der Linearantrieb 18 mit seinem der Horizontalachse 17 abgewandten Bereich in einer Schwinge 19 gelagert. Die Schwinge 19 ist gemäß der Figur 5 drehbar auf der Horizontalachse 17 gelagert. Bei einer Verstellung der Dosierplatte 14 folgt der Linearantrieb 18 der Verstellbewegung der Dosierplatte 14. Dabei stützt sich das der Horizontalachse 17 abgewandte Ende an einer ortsfesten Führungsfläche 20 ab. Die Hubeinrichtung 15 bildet demzufolge in Verbindung mit dem Linearantrieb 18, der Schwinge 19 und der Führungsfläche 20 eine Parallelführung, damit die Dosierplatte 14 in jeder ihrer einstellbaren Höhenlagen stets horizontal steht.

Die Hubeinrichtung 15 besteht im dargestellten Ausführungsbeispiel im wesentlichen aus einem zweiarmigen Hebel 21, der etwa mittig auf einer parallel und im Abstand zur Horizontalachse 17 verlaufenden ortsfesten Achse 22 drehfest aufgesetzt ist. Diese ortsfeste Achse erstreckt sich ebenfalls über die Länge der Dosierplatte 14 und läuft benachbart des der Hubeinrichtung 15 zugeordneten Randes. Erst das freie äußere, der Dosierplatte 14 abgewandt liegende Ende des zweiarmigen Hebels 21 trägt eine Spindelmutter 23. In diese Spindelmutter 23 ist eine Spindel 24 eingedreht. Das untere, dem Trog 11 zugewandte Ende der Spindel 24 ist in einem ortsfesten Lager 25 drehbar gelagert. Im dargestellten Ausführungsbeispiel ist das ortsfeste Lager 25 an einer Seitenwand 26 eines Einfülltrichters 27 festgelegt, der sich vom Horizontalförderer 10 bis in den Trog 11 erstreckt. Die zweite Wand des Einfülltrichters 27 ist durch das Bezugszeichen 28 gekennzeichnet. Die Spindel 24 kann durch eine Handkurbel 29 betätigt werden. Aus der Figur 5 ist zu entnehmen, daß der zweiarmige Hebel 21 aus zwei Einzelhebeln besteht, wobei die einander zugewandten Enden beide drehfest auf die ortsfeste Achse 22 aufgesetzt sind. Diese Achse 22 ist in mehreren über die Länge verteilten ortsfesten Lagern 30 gehalten. Benachbart dieser Lager 30 sind auf diese ortsfeste Achse 22 Lagerlasehen 31 aufgesetzt, die die Verbindung zur verstellbaren Horizontalachse 17 schaffen. Der Antrieb des Horizontalförderers 10 erfolgt durch einen Getriebemotor 32, der von einer Steuerungselektronik 33 gesteuert wird.

Von dieser Steuerungselektronik 33 wird die Fütterung in vorgegebenen zeitlichen Abständen ausgelöst. Durch Einschalten des Horizontalförderers 10 wird das Futter aus dem Einfülltrichter 16 abgezogen. Durch die Auslauföffnungen 13 des Gehäuses 12 hindurch fällt es auf die Dosierplatte 14. Über einen Taster 34, der vorzugsweise ein berührungsloser Taster ist, wird ermittelt, wann die letzte Spitze des sich bildenden Schüttkegels des Futters das Gehäuse 12 bzw. die Auslauföffnungen 13 erreicht haben, in diesem Moment wird ein Signal in die Steuerungselektronik 33 eingespeist, die den Getriebemotor 32 abschaltet. Die Schüttkegel bilden sich fortlaufend in Nähe des Trichters 16 beginnend über die gesamte Länge der Fütterungsanlage, wobei die einzelnen ansteigenden Schüttkegel mit zunehmenden Ausmaß die jeweilige Austrittsöffnung 13 verschließt. Anschließend wird dann der Linearantrieb 18 angesteuert, wodurch die Dosierplatte 14 in die in der Figur 3 dargestellte Schrägstellung verschwenkt wird, so daß das Futter in den Trog 11 fällt. Nach Erreichen seiner Endlage wird der Linearantrieb 18 automatisch umgeschaltet, wonach die Dosierplatte 14 in ihre waagerechte Ausgangsposition zurückgebracht wird.

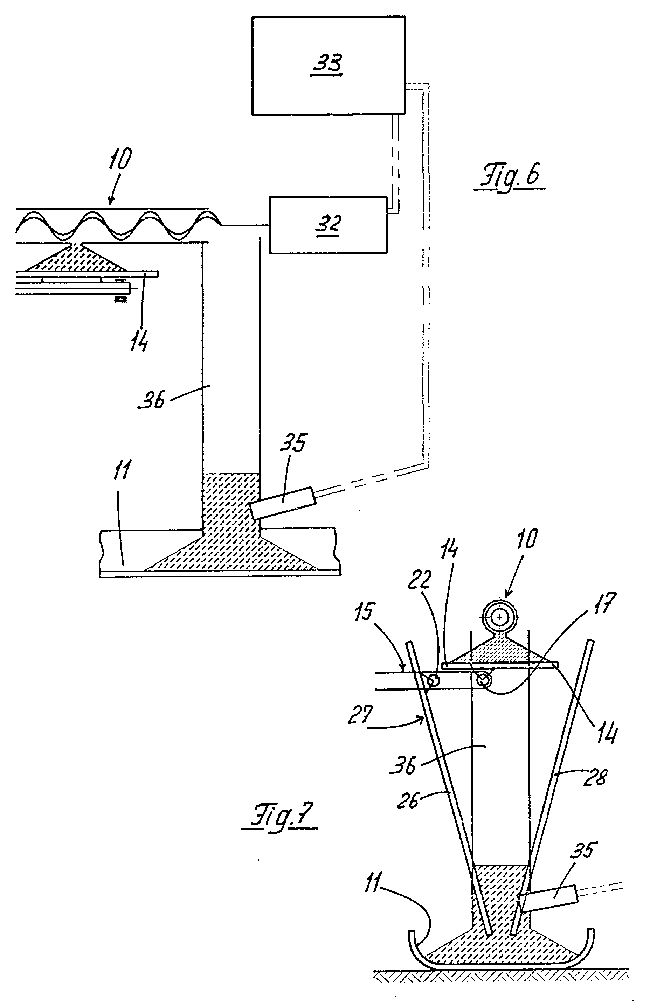

Im dargestellten Ausführungsbeispiel ist der Horizontalförderer 10 ein Schneckenförderer. Die Schnecke muß nicht mit wendelförmigen, durchgehenden Windungen versehen sein, sondern es könnten auch schrägstehende Scheiben sein. Anstelle des Horizontalförderers 10 könnte auch beispielsweise ein Schleppförderer sein. Die Hubeinrichtung 15 könnte konstruktiv vollkommen anderes gestaltet sein. Es lassen sich alle bekannten Hubeinrichtungen, beispielsweise Hubscheeren, Parallelführungsgestänge und ähnliche Konstruktionen verwenden. Die Einstellung der Dosierplatte 14 kann in einfachster Weise durch die Einstellung von Hand vorgenommen werden, doch könnte dies auch durch einen von der Steuerungselektronik angesteuerten Antrieb erfolgen. Vorteilhaft ist bei der dargestellten Fütterungsanlage, daß eine zwar veränderliche, aber während einer Einstellung stets gleichbleibende Menge in den Trog 11 geschüttet wird. Außerdem kann das Ausrieseln des Futters aus dem Gehäuse 12 bei Kontrollgängen visuell wahrgenommen werden. Obwohl in der einleitenden Beschreibung und in den Ansprüchen die Verwendung bei der Fütterung von Jungferkeln hervorgehoben wurde, ist der Erfindungsgegenstand bei entsprechender Dimensionierung für Großvieh ebenso geeignet. Die Figuren 6 und 7 zeigen eine mit einem Sensor 35 ausgerüstete Fütterungseinrichtung, der im dargestellten Ausführungsbeispiel dem Austrageende des Horizontalförderers 10 funktionell zugeordnet ist. Dieser nicht näher erläuterte Sensor 35 greift teilweise in das untere Ende eines Steigrohres 36 ein, welches, in Transportrichtung des Horizontalförderers 10 gesehen, direkt hinter der Dosierplatte 14 liegt. Dieses aufrecht stehende Steigrohr 36 ist nach unten offen, so daß das einlaufende Futter wiederum in einem Kegel abgelegt werden kann. In nicht näher dargestellter Weise wird der Horizontalförderer 10 abgeschaltet, wenn das Futter im Steigrohr 36 eine vorgegebene Füllstandshöhe erreicht hat. Der Horizontalförderer 10 wird demzufolge zeitverzögert abgeschaltet, nachdem sich auch der letzte, dem Austrageende des Horizontalförderers 10 zugewandte Futterkegel gebildet hat. Der Sensor 35 speist die Signale in die Steuerungselektronik 33 ein. Es kann dann beispielsweise über Leuchtdioden angezeigt werden, ob nach dem Reichen des Futters auch das in das Steigrohr 36 eingegebene Futter von den Ferkeln gefressen wurde oder nicht. Der Ferkelzüchter kann dann regelnd auf die Rationierung des Futters eingreifen. Durch den Sensor 35 in Verbindung mit dem Steigrohr 36 wird demzufolge eine Kontrollvorrichtung für den Verzehr des Futters geschaffen. Der Sensor 35 kann mit einem nach dem Hell- Dunkel-Prinzip arbeitenden Lichtstrahl ausgerüstet sein. Es können jedoch auch andere, bekannte Taster oder Fühler verwendet werden.

### Bezugszeichenliste

- 10 -: Horizontalförderer
- 11 -: Trog
- 12 -: Gehäuse
- 13 -: Auslauföffnungen
- 14 -: Dosierplatte
- 15 -: Hubeinrichtung
- 16 -: Vorratsbehälter
- 17 -: Horizontalachse
- 18 -: Linearantrieb
- 19 -: Schwinge
- 20 -: Führungsfläche
- 21 -: zweiarmiger Hebel
- 22 -: ortsfeste Achse
- 23 -: Spindelmutter
- 24 -: Spindel
- 25 -: Lager
- 26 -: Seitenwände
- 27 -: Einfülltrichter
- 28 -: Seitenwand
- 29 -: Handkurbel
- 30 -: Lager
- 31 -: Lagerlaschen
- 32 -: Getriebemotor
- 33 -: Steuerungselektronik
- 34 -: Taster
- 35 -: Sensor
- 36 -: Steigrohr

## Patentansprüche

1. Verfahren zum Betreiben einer im wesentlichen automatischen Fütterungsanlage für in Großbuchten gehaltene Absatzferkel, bei dem das Futter aus einem Vorratsbehälter mittels eines Horizontalförderers portioniert in einen Trog eingebracht wird,
**dadurch gekennzeichnet,**
daß mittels der unterhalb des Horizontalförderers (10) angeordneten Dosiereinrichtung das aus dem Horizontalförderer (10) auslaufende Futter aufgefangen wird, und daß der Futterstrom abgeschaltet wird, sobald eine vorgegebene Futtermenge über die gesamte Länge der Fütterungseinrichtung erreicht ist, und daß die jeweilige Futtermenge aus der Dosiereinrichtung in den Trog geschüttet wird, wobei die Futtermenge variabel und an die Bedürfnisse und dem Alter der Absatzferkel angepaßt ist.

2. Fütterungsanlage zur Durchführung des Verfahrens nach Anspruch 1,
**dadurch gekennzeichnet,**
daß die Dosiereinrichtung aus einer ebenen oder im wesentlichen ebenen Dosierplatte (14) oder einer Schale besteht, die an einer Hubeinrichtung (15) angelenkt und mit der der Abstand zum Horizontalförderer (10) stufenlos innerhalb des Hubes einstellbar ist.

3. Fütterungsanlage zur Durchführung des Verfahrens nach Anspruch 2,
**dadurch gekennzeichnet,**
daß der Horizontalförderer (10) ein äußeres festes Gehäuse (12) aufweist, welches an der der Dosiereinrichtung zugewandten Seite mit sich über die Länge der Dosiereinrichtung erstreckende, im Abstand zueinander angeordnete Ausströmöffnungen (13) versehen ist.

4. Fütterungsanlage nach den Anspruch 2,
**dadurch gekennzeichnet,**
daß die Dosiereinrichtung mittels eines angeschlossenen Schwenkantriebes um eine Horizontalachse (17) schwenkbar ist.

5. Fütterungsanlage nach Anspruch 4,
**dadurch gekennzeichnet,**
daß der Schwenkantrieb ein steuerbarer Linearantrieb (18) ist, der zwangsgeführt der Verstellbewegung der Dosiereinrichtung folgt.

6. Fütterungsanlage nach Anspruch 5,
**dadurch gekennzeichnet,**
daß der Linearantrieb (18) in einer an der Hubeinrichtung (15) gelagerten Schwinge (19) aufgehängt ist, wobei sich die Schwinge (19) und/oder der Linearantrieb (18) an einer ortsfesten Führungsfläche (20) abstützt.

7. Fütterungsanlage nach Anspruch 6,
**dadurch gekennzeichnet,**
daß die Führungsfläche (20) dem der Dosiereinrichtung abgewandten Ende des Linearantriebes (18) zugeordnet ist.

8. Fütterungsanlage nach Anspruch 2,
**dadurch gekennzeichnet,**
daß die Hubeinrichtung (15) einen auf einer ortsfesten Achse (22) schwenkbar gelagerten zweiarmigen Hebel (21) aufweist, der mit dem der Dosiereinrichtung zugeordneten Ende an einer sich über die Länge der Dosiereinrichtung erstreckenden Horizontalachse (17) angelenkt ist, und daß das gegenüberliegende freie Ende eine Spindelmutter (23) trägt, in die eine Stellspindel (24) eingedreht ist und deren gegenüberliegendes unteres Ende in einem ortsfesten Lager (25) gelagert ist.

9. Fütterungsanlage nach Anspruch 8,
**dadurch gekennzeichnet,**
daß die ortsfeste Achse (22) parallel und im Abstand zur Horizontalachse (17) verläuft und daß die bewegliche Horizontalachse (17) über mehrere Lagerlaschen (31) mit der ortsfesten Achse (22) verbunden ist.

10. Fütterungsanlage nach Anspruch 9,
**dadurch gekennzeichnet,**
daß die ortsfeste Achse (22) in mehreren Lagern (30) gelagert ist.

11. Fütterungsanlage nach einem oder mehreren der vorhergehenden Ansprüche 2 bis 10,
**dadurch gekennzeichnet,**
daß ein Sensor (35) zur Ermittlung des Trogzustandes vorgesehen ist, dessen Signale in die Steuerungselektronik (33) einspeisbar sind.

12. Fütterungsanlage nach Anspruch 11,
**dadurch gekennzeichnet,**
daß außerhalb der Dosierplatte (14) wenigstens ein aufrechtstehendes Steigrohr (36) angeordnet ist, welches an das Gehäuse (12) des Horizontalförderers (10) angeschlossen ist, und das in dem Steigrohr (36) im unteren, dem Horizontalförderer (10) abgewandten Bereich der Sensor (35) angeordnet ist.

13. Fütterungsanlage nach Anspruch 12,
**dadurch gekennzeichnet,**
daß der Sensor (35) teilweise in das Steigrohr (36) hineinragt.

14. Fütterungsanlage nach einem oder mehreren der vorhergehenden Ansprüche 11 bis 13,
**dadurch gekennzeichnet,**
daß das Steigrohr (36) an das Austrageende des Horizontalförderers (10) angeschlossen ist, daß der Sensor (35) mit der Steuerungselektronik (33) schaltungstechnisch verbunden ist und daß die vom Sensor (35) ermittelten Werte nach entsprechender Verarbeitung als entsprechende Signale erkennbar sind.

15. Fütterungsanlage nach einem oder mehreren der vorhergehenden Ansprüche 11 bis 14,
**dadurch gekennzeichnet,**
daß der Sensor (35) entlang der Hauptkörperachse des Steigrohres (36) stufenlos einstellbar angeordnet ist.
